# EUROPEAN PATENT APPLICATION

(11) **EP 2 434 449 A1**
(43) Date of publication of application: **28.03.2012**
(21) Application number: 11181878.7
(22) Date of filing: 19.09.2011
(51) Int. Cl.: G06Q 30/00, G06F 17/00

(54) **System and method for utilizing a morphing procedure in an information distribution network**

(30) Priority: 23.09.2010 US 924236
(71) Applicant: Sony Corporation, Tokyo 108-0075 (JP)
(72) Inventor: Smith, Tim, Carlsbad, CA California 92011 (US); Loughery III, Donald L., Long Beach, CA California 90803 (US); Frazier, Milton, San Marcos, CA California 92069 (US); Rainier, Rajiv, San Diego, CA California 92127 (US); Jacobs, Stephen, Ardsley, NY New York 10022 (US); Noronha, Austin, Sunnyvale, CA California 94086 (US)
(74) Representative: McGowan, Cathrine

(57) **Abstract**

A system and method for implementing an information distribution network includes an information service that is configured to provide information distribution services through the information distribution network. User devices are utilized by device users to communicate with the information service for receiving the information distribution services. Transport structures are implemented for communicating with various network entities in the information distribution network to collect appropriate metadata for targeting selected information to the device users. The transport structures automatically and dynamically perform morphing procedures during which the transport structures are sequentially attached to a plurality of host entities on a one-by-one basis for collecting corresponding metadata.

## Description

### BACKGROUND SECTION

### 1. Field of the Invention

This invention relates generally to techniques for distributing electronic information, and relates more particularly to a system and method for utilizing a morphing procedure in an information distribution network.

### 2. Description of the Background Art

Implementing effective methods for distributing electronic information is a significant consideration for designers and manufacturers of contemporary electronic systems. However, effectively distributing electronic information utilized by electronic devices may create substantial challenges for system designers. For example, enhanced demands for increased system functionality and performance may require more system processing power and require additional software resources. An increase in processing or software requirements may also result in a corresponding detrimental economic impact due to increased production costs and operational inefficiencies.

Furthermore, enhanced system capability to perform various advanced distribution operations may provide additional benefits to a system user, but may also place increased demands on the control and management of various system components. For example, an electronic system that effectively manages electronic advertising information may benefit from an effective implementation because of the large amount and complexity of the digital data involved.

Due to growing demands on system resources and substantially increasing data magnitudes, it is apparent that developing new techniques for distributing electronic information to electronic devices is a matter of concern for related electronic technologies. Therefore, for all the foregoing reasons, developing effective techniques for distributing electronic information remains a significant consideration for designers, manufacturers, and users of contemporary electronic systems.

### SUMMARY

Aspects of the invention are defined in the appended claims.

In accordance with embodiments of the present invention, a system and method for utilizing a morphing procedure in an information distribution network are disclosed. In one embodiment, a distribution system automatically provides various types of appropriate information for utilization by device users of corresponding user devices. For example, the distributed information may include, but is not limited to, commercial advertising information that is targeted towards specific device users. Unlike traditional advertising techniques that support a "pull" model that requires consumers to actively access desired advertising information, the foregoing distribution system supports a "push" model that automatically selects and transmits appropriate advertising information to targeted device users based upon corresponding metadata that defines both the device users and the various advertisers.

In one embodiment, the distribution system may support and utilize one or more transport structures that automatically transport various types of relevant information to and from appropriate entities in the distribution system. For example, the transport structures may be utilized to gather and transfer metadata regarding the various device users, the user devices, various services, and respective advertisers from an information service. In addition, the transport structures may also be utilized to provide links to targeted advertisements and/or electronic content to appropriate user devices.

In accordance with embodiments of the present invention, the transport structures may attach themselves to a designated host entity to collect metadata related to that host. The present invention advantageously supports a morphing procedure during which the attached transport structures may dynamically and automatically re-attach themselves to a new host in accordance with pre-defined instructions from an appropriate instruction source.

In certain embodiments, a transport structure may initially be created by a source entity by utilizing any effective origination techniques. The transport structure may be programmed with specific TS instructions in any effective manner. For example, in certain embodiments, a TS manager of a transport server may provide attachment instructions, task instructions, navigation instructions, and timing instructions to effectively control the transport structure.

The transport server or other appropriate entity may deploy the transport structure in the information distribution network. For example, in certain embodiments, the transport structure may be originally embedded in one or more user devices. Alternately, the transport structure may be transmitted to one or more user devices or other designated entities through the information distribution network. For example, in certain embodiments, the transport structure may be transmitted to an appropriate user device (or other target destination) while being attached to a corresponding advertisement or other type of electronic information.

The TS instructions of the transport structure may be read to determine appropriate functions for that particular transport structure. The transport structure automatically attaches itself to an appropriate host entity in accordance with the TS instructions. The host entity may include, but is not limited to, the actual user device, a device application, or a particular service program. The transport structure then collects and transmits appropriate metadata related to the host entity to the transport server (or other metadata destination) for more accurately targeting future advertisements.

In accordance with the TS instructions, the transport structure may periodically determine whether a morphing procedure is currently required by the TS instructions. If no morphing procedure is currently required, then the transport structure continues to collect and transmit appropriate metadata related to the host entity. However, if the transport structure determines that a morphing procedure is currently required by the TS instructions, then the transport structure automatically and dynamically re-attaches itself to a new host entity, as specified in the TS instructions. The transport structure may then advantageously collect and transmit appropriate metadata related to the new host entity for more accurately targeting future advertisements. For at least the foregoing reasons, the present invention therefore provides an improved system and method for utilizing a morphing procedure in an information distribution network.

### BRIEF DESCRIPTION OF THE DRAWINGS

Embodiments of the invention will now be described with reference to the accompanying drawings, throughout which like parts are referred to by like references, and in which:
FIG. 1 is a block diagram of a distribution system, in accordance with one embodiment of the present invention;
FIG. 2A is a block diagram for one embodiment of a transport structure, in accordance with the present invention;
FIG. 2B is a block diagram for one embodiment of a media file, in accordance with the present invention;
FIG. 2C is a block diagram for one embodiment of the TS instructions of FIG. 2A, in accordance with the present invention;
FIG. 2D is a block diagram for one embodiment of the metadata of FIG. 2A, in accordance with the present invention;
FIG. 3 is a block diagram for one embodiment of a user device from FIG. 1, in accordance with the present invention;
FIG. 4 is a block diagram for one embodiment of the user memory from FIG. 3, in accordance with the present invention;
FIG. 5 is a block diagram for one embodiment of the information service from FIG. 1, in accordance with the present invention;
FIG. 6A is a block diagram for one embodiment of the transport server from FIG. 5, in accordance with the present invention;
FIG. 6B is a block diagram for one embodiment of the server memory from FIG. 6A, in accordance with the present invention;
FIG. 7 is a block diagram for one embodiment of the ad server from FIG. 5, in accordance with the present invention; and
FIGS. 8A-8B are a flowchart of method steps for performing a morphing procedure, in accordance with one embodiment of the present invention.

### DETAILED DESCRIPTION

The present invention relates to an improvement in electronic data distribution techniques. The following description is presented to enable one of ordinary skill in the art to make and use the invention, and is provided in the context of a patent application and its requirements. Various modifications to the disclosed embodiments will be apparent to those skilled in the art, and the generic principles herein may be applied to other embodiments. Therefore, the present invention is not intended to be limited to the embodiments shown, but the appended claims are to be accorded the widest scope consistent with the principles and features described herein.

The present invention comprises a system and method for implementing an information distribution network, and includes an information service that is configured to provide information distribution services through the information distribution network. User devices are utilized by device users to communicate with the information service for receiving the information distribution services. Transport structures are implemented for communicating with various network entities in the information distribution network to collect appropriate metadata for targeting selected information to the device users. The transport structures automatically and dynamically perform morphing procedures during which the transport structures are sequentially attached to a plurality of host entities on a one-by-one basis for collecting corresponding metadata.

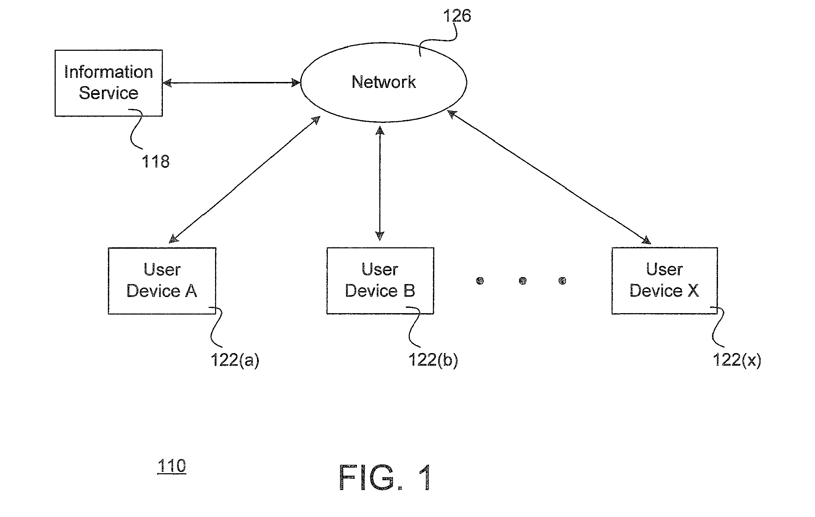

Referring now to FIG. 1, a block diagram of a distribution system 110 is shown, in accordance with one embodiment of the present invention. In the FIG. 1 embodiment, distribution system 110 may include, but is not limited to, one or more user devices 122, an information service 118, and a network 126. In alternate embodiments, distribution system 110 may be implemented by utilizing components and configurations in addition to, or instead of, certain of those components and configurations discussed in conjunction with the FIG. 1 embodiment.

In accordance with the present invention, distribution system 110 advantageously supports a distribution procedure that automatically provides various types of appropriate information for utilization by device users of corresponding user devices 122. For example, the distributed information may include, but is not limited to, commercial advertising information that is specifically targeted towards appropriate device users of user devices 122. Unlike traditional advertising techniques that support a "pull" model that requires consumers to actively access desired advertising information, the FIG. 1 distribution system 110 supports a "push" model that automatically selects and transmits appropriate advertising information to targeted device users based upon corresponding metadata that defines the device users, the user devices, and the various types of advertising information.

In the FIG. 1 embodiment, distribution system 110 may be implemented and supported by a distribution control entity that offers distribution services to the advertisers and device users in return for financial or other compensation. The distribution control entity may be a commercial enterprise that maintains and controls key elements of distribution system 110 such as the information service 118 or user devices 122.

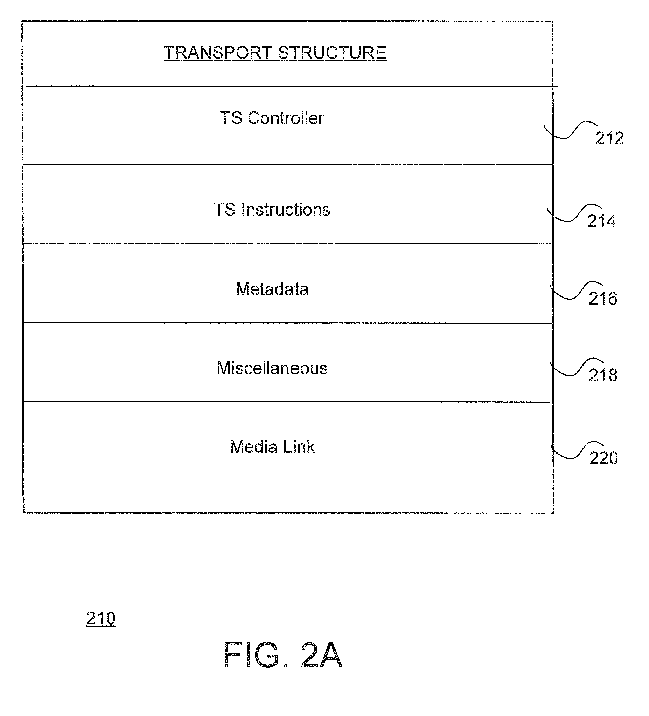

In accordance with the present invention, distribution system 110 may advantageously support and utilize one or more transport structures (see FIG. 2A) that automatically collect and transport various types of relevant information to and from appropriate entities in distribution system 110. For example, the transport structures may be utilized to gather and transfer metadata regarding the various device users, the user devices 122, the network 126, and respective advertisers and their advertisements from information service 118. In addition, the transport structures may also be utilized to transport or provide links to targeted advertisements and/or electronic content for access by appropriate user devices 122.

In accordance with the present invention, the transport structures may initially attach themselves to a designated host entity to collect metadata related to that host. The present invention advantageously supports a morphing procedure during which the attached transport structures may dynamically and automatically re-attach themselves to a new host in accordance with pre-defined instructions from an appropriate instruction source. The present invention thus provides an improved system and method for effectively performing a morphing procedure in an information distribution network. Further details regarding the implementation and utilization of the FIG. 1 distribution system 110 are discussed below in conjunction with FIGS. 2A-8B.

Referring now to FIG. 2A, a block diagram for one embodiment of a transport structure 210 is shown, in accordance with the present invention. The FIG. 2A embodiment is presented for purposes of illustration, and in alternate embodiments, transport structures 210 may be implemented by utilizing components and configurations in addition to, or instead of, certain of those components and configurations discussed in conjunction with the FIG. 2A embodiment.

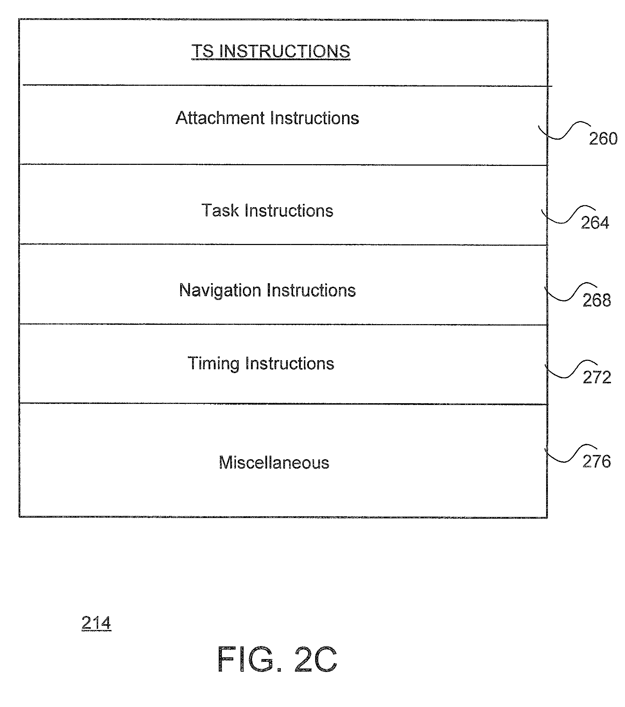

In the FIG. 2A embodiment, transport structure (TS) controller 212 may include any appropriate type of information or instructions for providing intelligent functionality and control for transport structure. In the FIG. 2A embodiment, TS controller 212 may attach itself to appropriate host entities in accordance with transport structure (TS) instructions 214 that are provided by any appropriate instruction source. In certain embodiments, TS controller 220 and TS instructions 214 may interact with, or be executed by, an external entity such as a processor of a user device 122. Additional details regarding one embodiment of TS instructions 214 are further discussed below in conjunction with FIG. 2C.

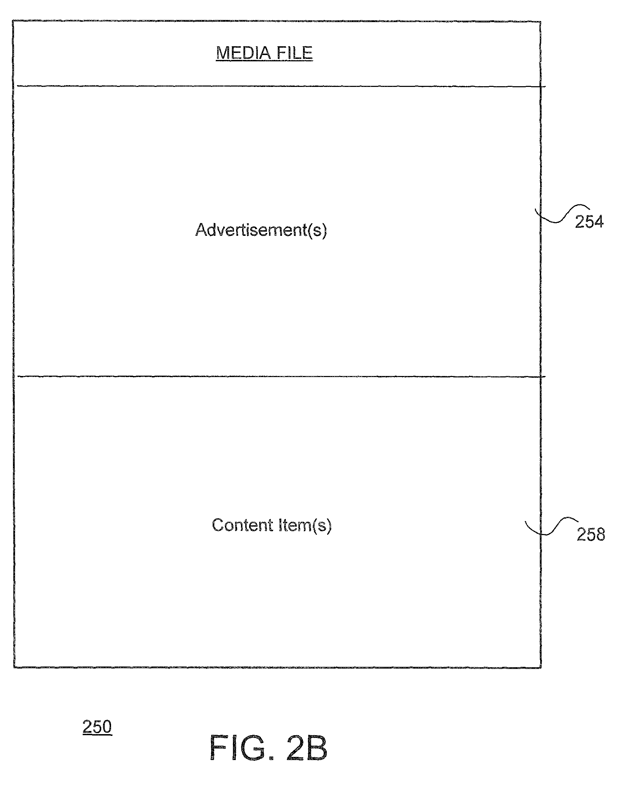

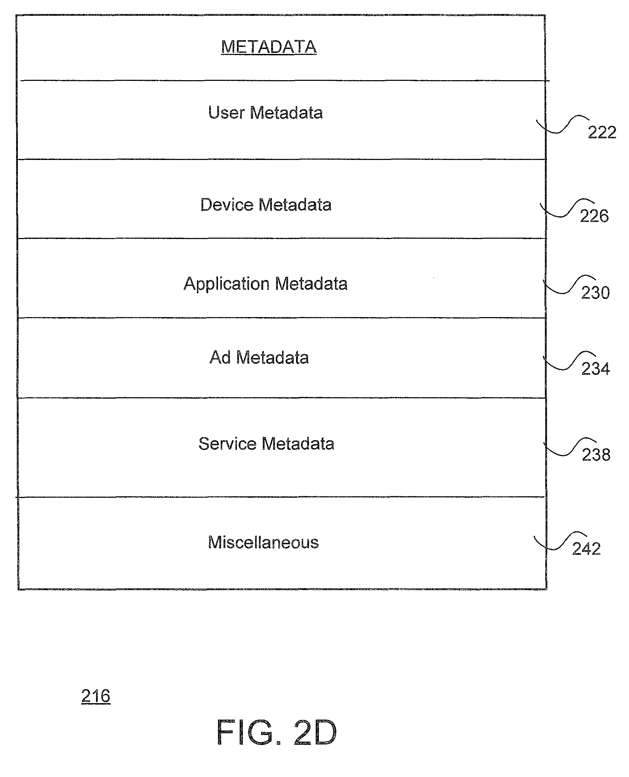

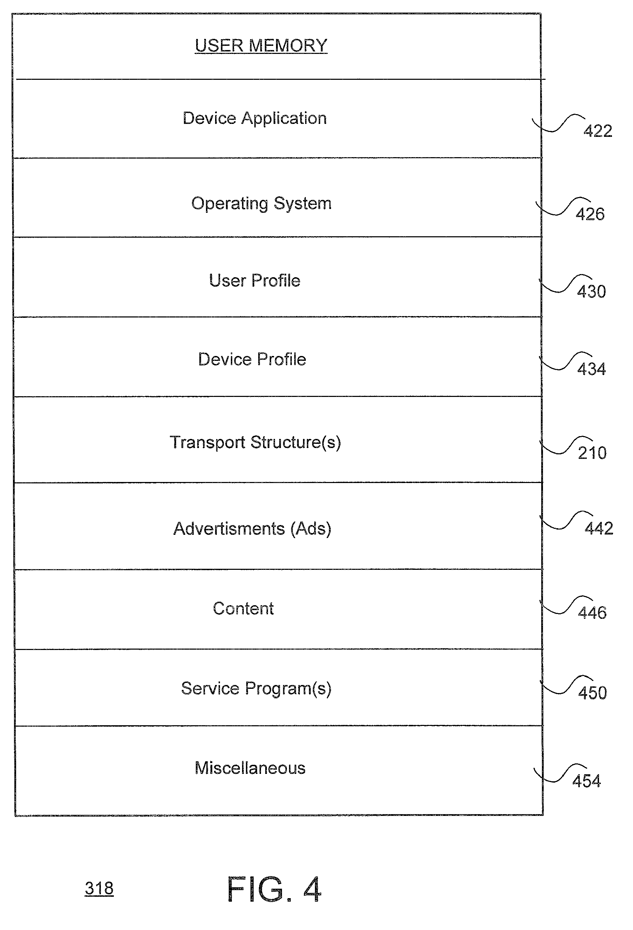

In the FIG. 2A embodiment, metadata 216 may include any type of collected and modifiable information related to any relevant entities coupled to distribution system 110. Additional details regarding one embodiment of metadata 216 are further discussed below in conjunction with FIG. 2D. In certain embodiments, transport structure 210 collects metadata 216 related to a particular host entity to which the transport structure 210 is currently attached. The host entity may be any specified type of component, device, software module, or other entity. For example, in the FIG. 2A embodiment, host entities may include, but are not limited to, user devices 122 (FIG. 1), device applications 422, and service programs 450 (see FIG. 4). In the FIG. 2A embodiment, miscellaneous information 218 may include any additional data or other required information. Media link 220 may include appropriate information to indicate a location or a connection means for accessing one or more media files, as discussed below in conjunction with FIG. 2B.

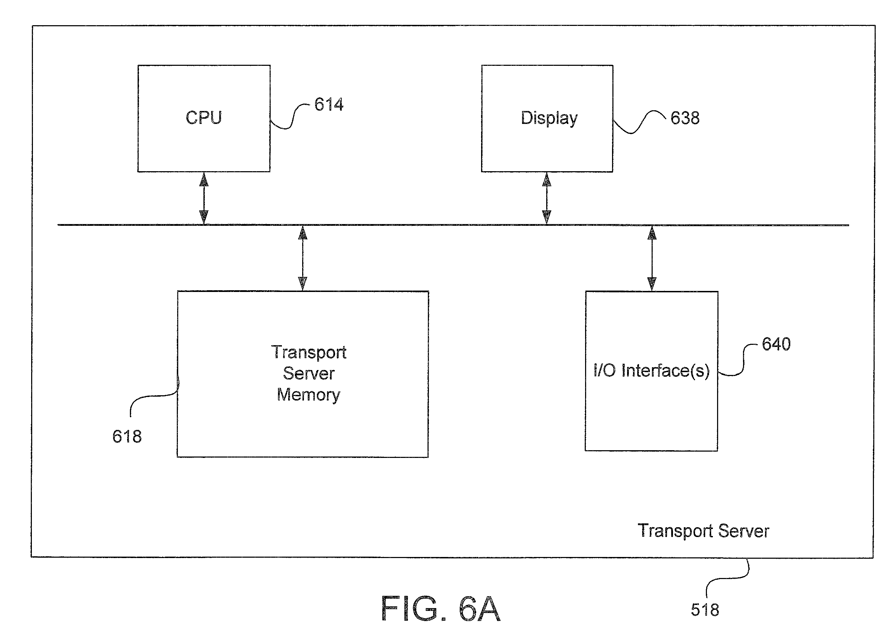

Transport structures 210 may be originated in any effective manner from any appropriate source. For example, transport structures 210 may be embedded in user devices 122 (FIG. 1), and activated by device users if desired. Alternately, various entities in network 126 or information service 118 may create or activate transport structures 210. For example, a transport server (see FIG. 6A) may manage the origination and operation of transport structures 210. In certain embodiments, transport structures 210 may be transmitted to user devices 122 via various advertisements. Further details regarding the implementation and utilization of the FIG. 2A transport structure 210 are discussed below in conjunction with FIGS. 2B-8B.

Referring now to FIG. 2B, a block diagram for one embodiment of a media file 250 is shown, in accordance with the present invention. The FIG. 2B embodiment is presented for purposes of illustration, and in alternate embodiments, media file 250 may be implemented by utilizing components and configurations in addition to, or instead of, certain of those components and configurations discussed in conjunction with the FIG. 2B embodiment. For example, the FIG. 2B media file 250 is shown as a separate entity that is accessible by utilizing the media link 246 of FIG. 2A. However, in alternate embodiments, media file 250 may be implemented integrally together with transport structure 210 of FIG. 2A.

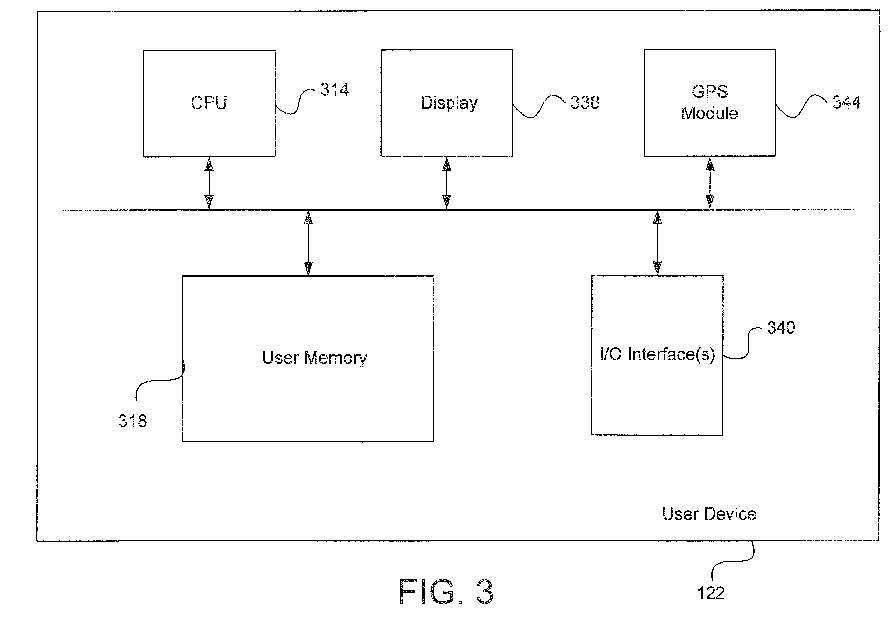

In the FIG. 2B embodiment, advertisements (ads) 254 may include any appropriate type of targeted advertising information that has been selected for transmission to appropriate ones of the user devices 122 (FIG. 1). Similarly, content items 258 may include any appropriate type of electronic content information that has been selected for transmission to appropriate ones of the user devices 122. For example, content 258 may include, but is not limited to, video data, audio data, graphics, text, movies, music recordings, and computer programs. Further information for providing appropriate media files 250 to targeted device users is further discussed below in conjunction with FIGS. 3-8B.

Referring now to FIG. 2C, a block diagram for one embodiment of the FIG. 2A TS instructions 214 is shown, in accordance with the present invention. The FIG. 2C embodiment is presented for purposes of illustration, and in alternate embodiments, TS instructions 214 may be implemented by utilizing components, functionalities, and configurations in addition to, or instead of, certain of those components, functionalities, and configurations discussed in conjunction with the FIG. 2C embodiment.

In the FIG. 2C embodiment, TS instructions 214 may be created in any effective manner. For example, in one embodiment, TS instructions 214 may be created by a TS manager 648 of a transport server (FIG. 6A) or any other appropriate entity. In addition, TS instructions 214 may be altered or updated at any desired time. In the FIG. 2C embodiment, attachment instructions 260 provide specific instructions for transport structure 210 to attach itself to one or more host entities for collecting related metadata 216 (FIG. 2A). In addition, attachment instructions 260 may include information to support morphing procedures during which transport structure 210 re-attaches itself to a different host entity for collecting corresponding metadata 216.

In the FIG. 2C embodiment, task instructions 264 may include any appropriate instructions or other information that indicate specific tasks, operations, functions, or steps for performance by transport structure 210. For example, in certain embodiments, task instructions 264 may include detailed instructions describing the type of information that transport structure 210 is directed to collect and/or distribute. In the FIG. 2C embodiment, navigation instructions 268 may include any appropriate instructions or other information that provide specific navigational directions or limitations for transport structure 210. For example, in certain embodiments, navigation instructions 268 may define at least one navigation path that is defined by one or more origin points and one or more destination points.

In the FIG. 2C embodiment, timing instructions 272 may provide instructions to specifically indicate an attachment time at which transport structure 210 is instructed to attach itself to one or more host entities for collecting related metadata 216 (FIG. 2A). In addition, timing instructions 272 may include information that is used in conjunction with attachment instructions 260 to support morphing procedures during which transport structure 210 re-attaches itself at a specific time to a different host entity for collecting corresponding metadata 216.

In the FIG. 2C embodiment, miscellaneous instructions 276 may include any additional instructions or other appropriate information for controlling the operations of transport structure 210. Further information and details regarding the creation and utilization of TS instructions 214 are further discussed below in conjunction with FIGS. 2D-8B.

Referring now to FIG. 2D, a block diagram for one embodiment of the FIG. 2A metadata 216 is shown, in accordance with the present invention. In the FIG. 2D embodiment, the various categories of metadata 216 represent different potential attachment dimensions for host entities to which a transport structure 210 (FIG. 2A) may be attached. The FIG. 2D embodiment is presented for purposes of illustration, and in alternate embodiments, metadata 216 may be implemented by utilizing components, functionalities, and configurations in addition to, or instead of, certain of those components, functionalities, and configurations discussed in conjunction with the FIG. 2D embodiment.

In the FIG. 2D embodiment, user metadata 222 may include information regarding one or more device users of user devices 122 (FIG. 1). User metadata 222 may include any desired type of information. For example, user metadata 222 may include, but is not limited to, past and present user behaviors, such as purchasing transactions and Internet browsing patterns. In certain embodiments, user metadata 222 may also include information selectively compiled from one or more appropriate user profiles 430 (FIG. 4).

Similarly, device metadata 226 may include any desired types of information regarding one or more user devices 122. For example, device metadata 226 may include, but is not limited to, specific functionalities and characteristics of corresponding user devices 122. In certain embodiments, device metadata 226 may be selectively compiled from one or more appropriate device profiles 434 (FIG. 4). In the FIG. 2A embodiment, application metadata 230 may include any desired types of information regarding various attributes or functions of one or more device applications 422 of a user device 122 (see FIG. 4).

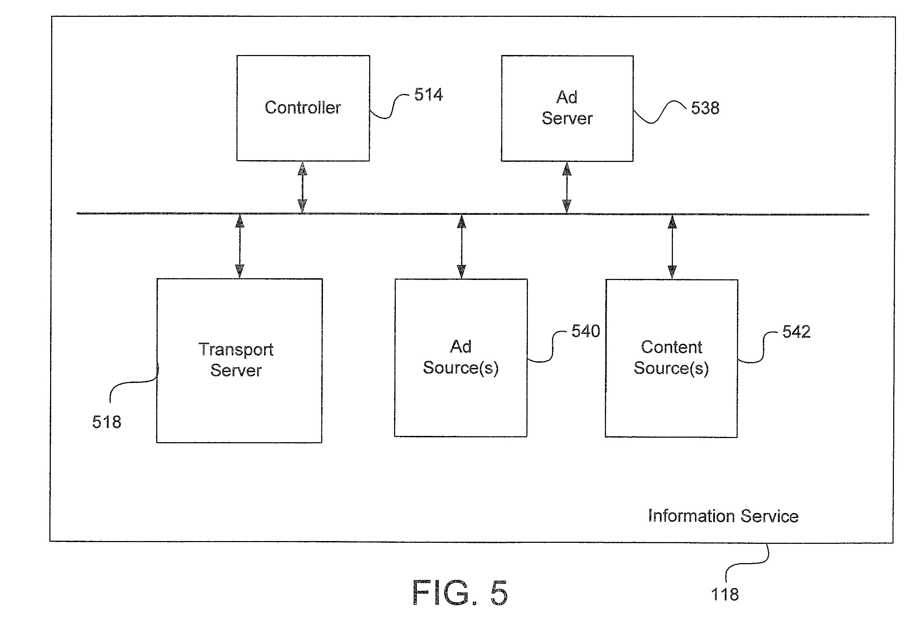

In the FIG. 2D embodiment, ad metadata 234 may include any desired types of information regarding one or more advertisers and advertisements that are associated with distribution system 110. In certain embodiments, the advertisements may be associated with ad sources 540 (FIG. 5). In the FIG. 5 embodiment, ad metadata 234 may include ad characteristics or functions related to corresponding advertisements. For example, ad characteristics may include, but are not limited to, product types, ad viewing histories, ad formats, ad lengths, and ad media types.

In the FIG. 2D embodiment, service metadata 238 may include any desired types of information regarding one or more network services or service programs 450 (FIG. 4).

Such service programs 450 may include any desired type of functionality that provides a service to a device user through a corresponding user device 122. For example, service programs 450 may include, but are not limited to, a cellphone service provider, an Internet service provider, a paid-content provider service, a core communications service, a network map service, a global positioning service, an Internet searching service, and a wireless communications service. In the FIG. 2D embodiment, miscellaneous information 242 may include any additional data or other appropriate information.

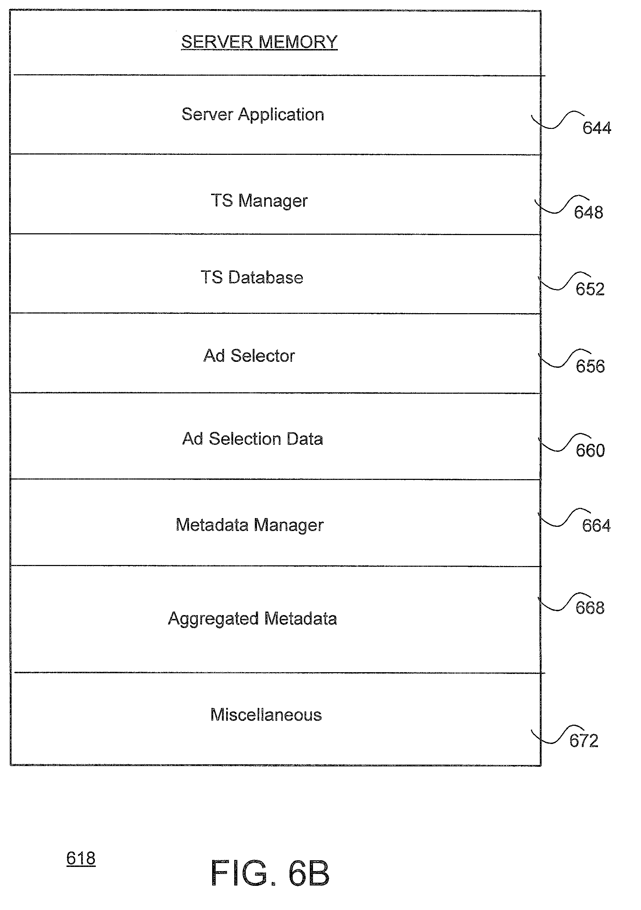

Various entities in distribution system 110 may utilize the metadata 216 collected by transport structure 210 in any appropriate manner. For example, in accordance with the present invention, an ad selector (see FIG. 6B) may perform an ad selection procedure by identifying and matching compatible elements of user metadata 222, device metadata 226, ad metadata 234, and/or service metadata 238 to thereby identify appropriate types of relevant advertising information for automatic transmission to targeted device users. Further information and details regarding the creation and utilization of metadata 216 are further discussed below in conjunction with FIGS. 3-8B.

Referring now to FIG. 3, a block diagram for one embodiment of a FIG. 1 user device 122 is shown, in accordance with the present invention. In the FIG. 3 embodiment, user device 122 includes, but is not limited to, a central processing unit (CPU) 314, a memory 318, a display 338, a global positioning system (GPS) module 344, and one or more input/output interface(s) (I/O interface(s)) 340.

The FIG. 3 embodiment is presented for purposes of illustration, and in alternate embodiments, a user device 122 may be implemented using components and configurations in addition to, or instead of, certain of those components and configurations discussed in conjunction with the FIG. 3 embodiment. In addition, user device 122 may be implemented as any type of portable or non-portable electronic device, including, but not limited to, a desktop computer, a personal digital assistant, a digital camera, a cellular telephone, a settop box, or a laptop computer.

In the FIG. 3 embodiment, CPU 314 may be implemented to include any appropriate and compatible microprocessor device that preferably executes software instructions to thereby control and manage the operation of user device 122. The FIG. 3 display 338 may include any effective type of display technology including a cathode-ray-tube monitor or a liquid-crystal display device with an appropriate screen for displaying various information to a device user. In the FIG. 3 embodiment, I/O interface(s) 340 may include one or more input and/or output interfaces to receive and/or transmit any required types of information by user device 122.

In the FIG. 3 embodiment, memory 318 may be implemented to include any combination of desired storage devices, including, but not limited to, read-only memory (ROM), random-access memory (RAM), and various types of non-volatile memory, such as floppy disks, memory sticks, compact disks, or hard disks. In the FIG. 3 embodiment, user device 122 may utilize GPS module 344 for performing any known or enhanced device location procedures to provide location coordinates corresponding to user device 122. Additional details for the utilization and management of user device 122 are further discussed below in conjunction with FIGS. 4-8B.

Referring now to FIG. 4, a block diagram for one embodiment of the FIG. 3 user memory 318 is shown, in accordance with the present invention. In alternate embodiments, user memories 318 may be implemented by utilizing components and configurations in addition to, or instead of, certain of those components and configurations discussed in conjunction with the FIG. 4 embodiment.

In the FIG. 4 embodiment, device application 422 may include program instructions that are preferably executed by CPU 314 to perform various functions and operations for user device 122. The particular nature and functionality of device application 422 typically varies depending upon factors such as the specific type and particular functionality of the corresponding user device 122. In certain embodiments, device application 422 may serve as a host entity to which a transport structure 210 attaches itself to monitor and record corresponding metadata 216. In the FIG. 4 embodiment, operating system 426 preferably controls and coordinates low-level functionality of user device 122. In certain embodiments, operating system 426 may serve as a host entity to which a transport structure 210 attaches itself to monitor and record corresponding metadata 216 related to user device 122.

In the FIG. 4 embodiment, user device 122 may include a user profile 430 and a device profile 434 that collectively describe certain attributes or characteristics related to user device 122 or a device user of user device 122. For example, user profile 430 may include, but is not limited to, information regarding a device user's name, gender, age, religion, hobbies, interests, occupation, marital status, residence, income, Internet browsing history, geographic location, credit-card transaction records, and user preferences. Similarly, device profile 434 may include, but is not limited to, a device type, a device manufacturer, past and present device locations, supported device functionalities, and a device configuration. In the FIG. 4 embodiment, advertisements (ads) 442 may include targeted advertising information that has been received via distribution system 110 (see FIG. 1) specifically for a device user of user device 122. Similarly, content 446 may include targeted electronic content information that has been received via distribution system 110 (FIG. 1) specifically for a device user of user device 122.

In the FIG. 4 embodiment, service program(s) 450 may include, but are not limited to, any desired type of functionality that provides a service to a device user through a corresponding user device 122. For example, service programs 450 may include, but are not limited to, a cellphone service provider, an Internet service provider, a paid-content provider service, a core communications service, a network map service, a global positioning service, an Internet searching service, and a wireless communications service. In certain embodiments, any of the service programs 450 may serve as a host entity to which a transport structure 210 attaches itself to monitor and record corresponding metadata 216. In the FIG. 4 embodiment, miscellaneous information 454 may include any additional data or other appropriate information. Further details regarding the implementation and utilization of the FIG. 4 user memory 318 are discussed below in conjunction with FIGS. 5-8B.

Referring now to FIG. 5, a block diagram for one embodiment of the FIG. 1 information service 118 is shown, in accordance with the present invention. In the FIG. 5 embodiment, information service 118 includes, but is not limited to, a controller 514, a transport server 518, an ad server 538, one or more ad sources 540, and one or more content sources 542. The FIG. 5 embodiment is presented for purposes of illustration, and in alternate embodiments, information service 118 may be implemented using components and configurations in addition to, or instead of, certain of those components and configurations discussed in conjunction with the FIG. 5 embodiment.

In the FIG. 5 embodiment, controller 514 may be implemented to include any effective control means for coordinating operating functionalities of information service 118. For example, in certain embodiments, controller 514 may be implemented as a computer device with a corresponding control application program that manages the operation of information service 118. Alternately, controller 514 may be implemented as a central processing unit that includes any appropriate and compatible microprocessor device for executing software instructions to thereby control and manage the operation of information service 118.

In the FIG. 5 embodiment, transport server 518 may include any effective means for communicating with and controlling one or more transport structures 210 (FIG. 2), in accordance with the present invention. Additional details regarding the implementation and utilization of transport server 518 are further discussed below in conjunction with FIGS. 6A-6B. In the FIG. 5 embodiment, ad source(s) 540 may include one or more appropriate entities for providing advertisement information for dissemination through distribution system 110 (FIG. 1). For example, ad sources 540 may include various commercial enterprises, specific advertisers, or advertising developers.

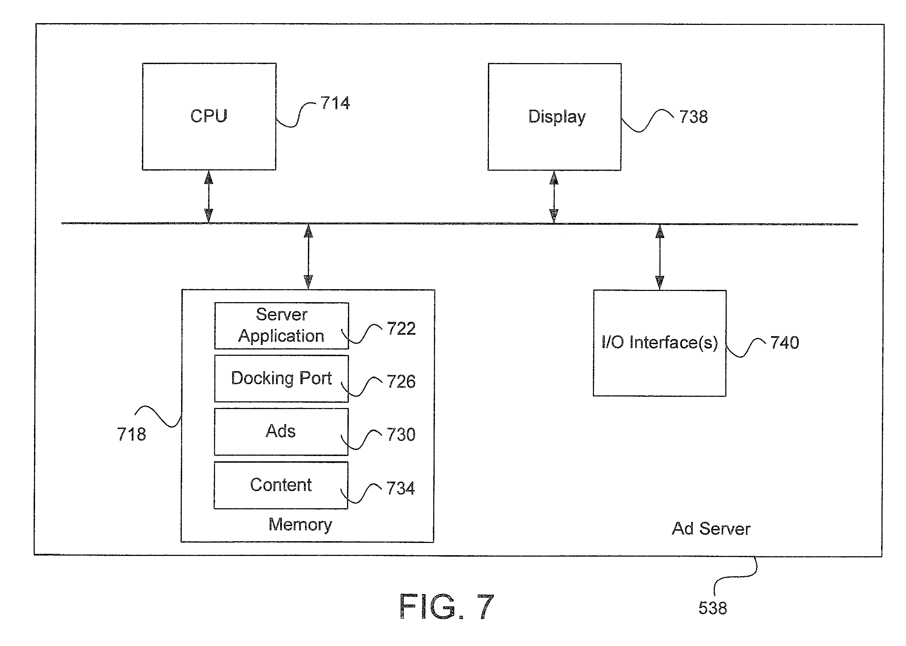

In the FIG. 5 embodiment, content source(s) 542 may include one or more appropriate entities for providing electronic content for dissemination through distribution system 110. For example, content sources 542 may include various commercial enterprises, specific advertisers, or content producers. In the FIG. 5 embodiment, ad server 538 may include any effective means for identifying and aggregating appropriate advertising information and/or electronic content for providing to targeted device users of user devices 122 (FIG. 1) by utilizing metadata from one or more transport structures 210 (FIG. 2A). One embodiment of ad server 538 is further discussed below in conjunction with FIG. 7. Additional details for the implementation and utilization of information service 118 are further discussed below in conjunction with FIGS. 6-8B.

Referring now to FIG. 6A, a block diagram for one embodiment of the transport server 518 of FIG. 5 is shown, in accordance with the present invention. In the FIG. 6A embodiment, transport server 518 includes, but is not limited to, a central processing unit (CPU) 614, a memory 618, a display 638, and one or more input/output interface(s) (I/O interface(s)) 640. The FIG. 6A embodiment is presented for purposes of illustration, and in alternate embodiments, transport servers 518 may be implemented using components and configurations in addition to, or instead of, certain of those components and configurations discussed in conjunction with the FIG. 6A embodiment.

In the FIG. 6A embodiment, CPU 614 may be implemented to include any appropriate and compatible microprocessor device that preferably executes software instructions to thereby control and manage the operation of transport server 518. The FIG. 6A display 638 may include any effective type of display technology including a cathode-ray-tube monitor or a liquid-crystal display device with an appropriate screen for displaying various information to a device user. In the FIG. 6A embodiment, I/O interface(s) 640 may include one or more input and/or output interfaces to receive and/or transmit any required types of information by transport server 518. In the FIG. 6A embodiment, transport server memory 618 may be implemented to include any combination of desired storage devices, including, but not limited to, read-only memory (ROM), random-access memory (RAM), and various types of non-volatile memory, such as floppy disks, memory sticks, compact disks, or hard disks.

Referring now to FIG. 6B, a block diagram for one embodiment of the FIG. 6A transport server memory 618 is shown, in accordance with the present invention. In alternate embodiments, transport server memories 618 may be implemented by utilizing components and configurations in addition to, or instead of, certain of those components and configurations discussed in conjunction with the FIG. 6B embodiment.

In the FIG. 6B embodiment, transport server memory 618 may include, but is not limited to, a number of software programs and data that are disclosed and described below. For example, transport server memory 618 may include a server application 644 of program instructions that are preferably executed by CPU 614 to perform various functions and operations for transport server 518. The particular nature and functionality of server application typically varies depending upon factors such as the specific type and particular functionality of the corresponding transport server 518.

The transport server 518 may utilize a TS manager 648 to manage and coordinate various functions for one or more transport structures 210 (FIG. 2A), in accordance with the present invention. In certain embodiments, the TS manager 648 may include a registration module for coordinating registration procedures to register device users of user devices 122 for participating in various authorized distribution services from distribution system 110 (FIG. 1). A TS database 652 may include any appropriate information regarding the transport structures 210 that provide distribution services to various entities in distribution system 110. In certain embodiments, the TS manager 648 may continually update respective transport structure information in the TS database 652 to reflect the current status of transport structures 210 in distribution system 110.

In certain embodiments, the transport server 518 may include an ad selector 656 and ad selection data 660 for performing ad selection procedures on behalf of one or more device users and corresponding user devices 122. In the FIG. 6B embodiment, a metadata manager 664 or other appropriate entity may perform a metadata analysis/aggregation procedure upon metadata 216 from transport structures 210 by utilizing any effective techniques. In certain embodiments, the metadata analysis/aggregation procedure identifies various types and categories of aggregated metadata 668 for utilization by ad selector 656 during ad selection procedures.

In certain embodiments, metadata manager 664 may analyze the metadata 216 gathered from user devices 122 and corresponding device users in light of certain predefined criteria to identify specific targeting characteristics and parameters in aggregated metadata 668. For example, targeting characteristics may include, but are not limited to, selected characteristics from user metadata 222, device metadata 226, application metadata 230, ad metadata 234, and service metadata 238 (see FIG. 2D). In the FIG. 6B embodiment, miscellaneous information 672 may include any desired type of information or data for utilization by transport server 518.

Referring now to FIG. 7, a block diagram for one embodiment of the ad server 538 of FIG. 5 is shown, in accordance with the present invention. In the FIG. 7 embodiment, ad server 538 includes, but is not limited to, a central processing unit (CPU) 714, a memory 718, a display 738, and one or more input/output interface(s) (I/O interface(s)) 740. The FIG. 7 embodiment is presented for purposes of illustration, and in alternate embodiments, ad server 538 may be implemented using components and configurations in addition to, or instead of, certain of those components and configurations discussed in conjunction with the FIG. 7 embodiment.

In the FIG. 7 embodiment, CPU 714 may be implemented to include any appropriate and compatible microprocessor device that preferably executes software instructions to thereby control and manage the operation of ad server 538. The FIG. 7 display 738 may include any effective type of display technology including a cathode-ray-tube monitor or a liquid-crystal display device with an appropriate screen for displaying various information to a device user. In the FIG. 7 embodiment, I/O interface(s) 740 may include one or more input and/or output interfaces to receive and/or transmit any required types of information by ad server 538.

In the FIG. 7 embodiment, memory 718 may be implemented to include any combination of desired storage devices, including, but not limited to, read-only memory (ROM), random-access memory (RAM), and various types of non-volatile memory, such as floppy disks, memory sticks, compact disks, or hard disks. In the FIG. 7 embodiment, memory 718 includes, but is not limited to, a server application 722, a docking port 726, ads 730, and content 734.

In the FIG. 7 embodiment, server application 722 may include program instructions that are preferably executed by CPU 714 to perform various functions and operations for ad server 538. The particular nature and functionality of server application 722 typically varies depending upon factors such as the specific type and particular functionality of the corresponding ad server 538. In certain embodiments, server application 722 may analyze ad selections from user devices 122, transport server 518, or other appropriate entities to identify and provide appropriate advertisements to targeted device users of user devices 122 (FIG. 1).

In the FIG. 7 embodiment, docking port 726 may include any effective interface means for ad server 538 to bi-directionally communicate with one or more transport structures 210 (FIG. 2) to transfer ads 730, content 734, or ad selection information. In the FIG. 7 embodiment, ads 730 include advertising information that is provided to ad server 538 from any appropriate entities, such as ad sources 540 (FIG. 5). Similarly, in the FIG. 7 embodiment, content 734 includes electronic content that is provided to ad server 538 from any appropriate entities, such as content sources 542 (FIG. 5).

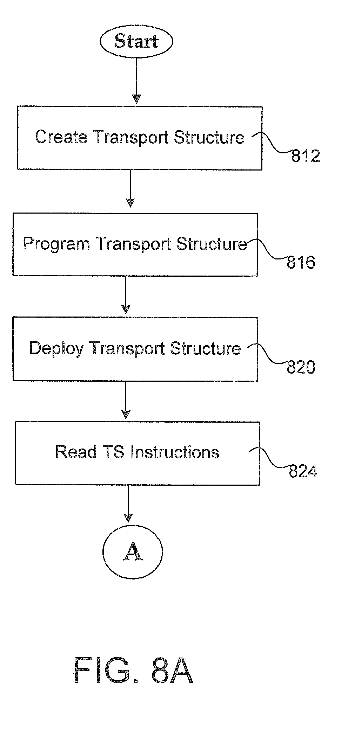

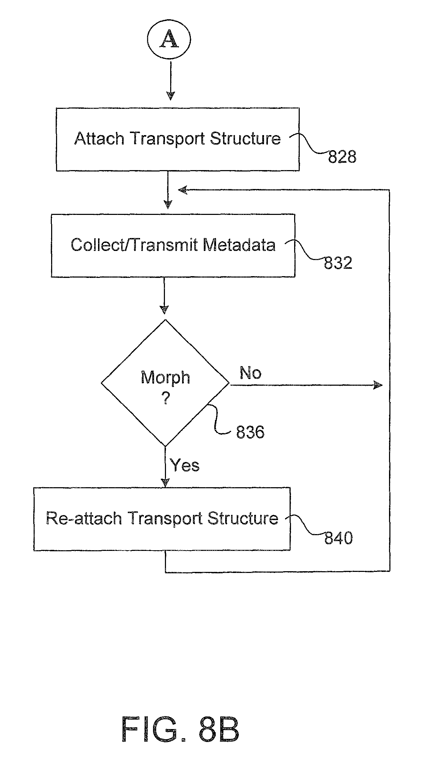

Referring now to FIGS. 8A-8B, a flowchart of method steps for performing a morphing procedure is shown, in accordance with one embodiment of the present invention. The FIG. 8 flowchart is presented for purposes of illustration, and in alternate embodiments, the present invention may utilize steps and sequences other than those steps and sequences discussed in conjunction with the FIG. 8 embodiment.

In step 812 of FIG. 8A, a transport structure 210 may initially be created by a source entity by utilizing any effective origination techniques. In step 816, the transport structure 210 may be programmed with specific TS instructions 214 in any effective manner. For example, in certain embodiments, a TS manager 648 of a transport server 518 may provide attachment instructions 260, task instructions 264, navigation instructions 268, and timing instructions 272 to effectively control the transport structure 210.

In step 820, the transport server 518 or other appropriate entity deploys the transport structure 210 in an information distribution system 110. For example, in certain embodiments, the transport structure 518 may be originally embedded in one or more user devices 122. Alternately, the transport structure 210 may be transmitted to one or more user devices 122 or other designated entities through the information distribution system 110. For example, in certain embodiments, the transport structure 210 may be transmitted to an appropriate user device 122 (or other target destination) while being attached to a corresponding advertisement or other type of electronic information.

In step 824, the TS instructions 214 of the transport structure 210 are read to determine appropriate functions for the transport structure 210. The FIG. 8A process then advances to step 828 of FIG. 8B through connecting letter "A." In step 828 of FIG. 8B, the transport structure 210 automatically attaches itself to an appropriate host entity in accordance with the TS instructions 214 that were previously created in foregoing step 816. The host entity may include, but is not limited to, the user device 122, a device application 422, or a service program 450.

In step 832, the transport structure 210 collects and transmits appropriate metadata 216 related to the host entity to the transport server 518 (or other metadata destination) for more accurately targeting future advertisements. In step 836, the transport structure 210 determines whether a morphing procedure is currently required by the TS instructions 214. If no morphing procedure currently required, then the transport structure 210 continues to collect and transmit appropriate metadata 216 related to the host entity, as described in step 832.

However, if the transport structure 210 determines that a morphing procedure is currently required by the TS instructions 214, then in step 840, the transport structure 210 automatically and dynamically re-attaches itself to a new host entity, as specified in the TS instructions 214. The transport structure 210 may then advantageously collect and transmit appropriate metadata 216 related to the new host entity for more accurately targeting future advertisements. For at least the foregoing reasons, the present invention therefore provides an improved system and method for utilizing a morphing procedure in an information distribution network.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

The invention has been explained above with reference to certain embodiments. Other embodiments will be apparent to those skilled in the art in light of this disclosure. For example, the present invention may readily be implemented using certain configurations and techniques other than those described in the specific embodiments above. Additionally, the present invention may effectively be used in conjunction with systems other than those described above. Therefore, these and other variations upon the discussed embodiments are intended to be covered by the present invention, which is limited only by the appended claims.

Various respective aspects and features of the invention are defined in the appended claim. Combinations of features from the dependent claims may be combined with features of the independent claim as appropriate and not merely as explicitly set out in the claims.

## Claims

1. A system for implementing an information distribution network, comprising:
an information service that is configured to provide information distribution services through said information distribution network;
a user device that a device user utilizes to communicate with said information service for receiving said information distribution services; and
a transport structure that collects metadata for targeting selected information from said information service to said device user through said user device, said transport structure performing a morphing procedure during which said transport structure is sequentially attached on a one-by-one basis to a plurality of host entities for collecting said metadata.

2. The system of claim 1 wherein said selected information includes advertising information and electronic content.

3. The system of claim 1 further comprising a transport server that coordinates operations of said transport structure by providing transport structure instructions for said transport structure, wherein said transport structure instructions include attachment instructions, task instructions, navigation instructions, and timing instructions.

4. The system of claim 1 wherein said host entities include said user device and/or a device application of said user device.

5. The system of claim 1 wherein said host entities include a service that is associated with said user device.

6. The system of claim 1 wherein said host entities include one or more advertisements.

7. The system of claim 3 wherein said transport server analyzes said metadata to identify relevant advertisements for sending to said device user.

8. The system of claim 3 wherein said transport server programs said transport structure with attachment instructions, task instructions, navigation instructions, and timing instructions to control said transport structure.

9. The system of claim 8 wherein said transport structure is deployed in said information distribution network by being originally embedded in said user devices, or by being transmitted to said user device while being attached to a corresponding advertisement.

10. The system of claim 9 wherein said transport structure is automatically attached to a first host entity in accordance with said transport structure instructions, said transport structure collecting and transmitting said metadata related to said first host entity to said transport server for more accurately targeting future advertisements.

11. The system of claim 10 wherein said transport structure determines whether a morphing procedure is currently required by said transport structure instructions.

12. The system of claim 11 wherein said transport structure performs said morphing procedure to automatically re-attach to a second host entity as specified in said transport structure instructions, said transport structure then collecting and transmitting said metadata related to said second host entity for more accurately targeting said future advertisements.

13. The system of claim 1 wherein said selected information is targeted to said device user by matching aspects of said selected information to targeting characteristics from said metadata.

14. The system of claim 1 wherein said transport structure is controlled by a transport structure software module that is executed by a processor of said user device.

15. A user device for use in a system for implementing an information distribution network according to any one of claims 1 to 14, the user device comprising:
a device application that a device user utilizes to communicate with an information service for receiving said information distribution services; and
a transport structure that collects metadata for targeting selected information from said information service to said device user through said user device, said transport structure performing a morphing procedure during which said transport structure is sequentially attached on a one-by-one basis to a plurality of host entities for collecting said metadata.
